# EUROPEAN PATENT SPECIFICATION

(11) **EP 2 046 600 B1**
(45) Date of publication and mention of the grant of the patent: **11.05.2011**
(21) Application number: 07787984.9
(22) Date of filing: 27.07.2007
(51) Int. Cl.: B60N 2/30, B60N 2/22, B60N 2/12, B60N 2/02

(54) **SEAT ASSEMBLY PROVIDED WITH AN ARTICULATED-QUADRILATERAL SUPPORTING DEVICE FOR A MOTOR VEHICLE**
SITZANORDNUNG MIT VIERSEITIGER GELENKIGER TRÄGERVORRICHTUNG FÜR EIN KRAFTFAHRZEUG
ENSEMBLE DE SIÈGE MUNI D'UN DISPOSITIF DE SUPPORT QUADRILATÉRAL ARTICULÉ POUR UN VÉHICULE À MOTEUR

(30) Priority: 27.07.2006 EP 06425529
(43) Date of publication of application: 15.04.2009
(73) Proprietor: C.R.F. Società Consortile per Azioni, 10043 Orbassano (Torino) (IT)
(72) Inventor: DEMONTIS, Salvatore, I-10043 Orbassano (IT); MASOERO, Giorgio, I-10043 Orbassano (IT); STORGATO, Angelo, I-10043 Orbassano (IT)
(74) Representative: Bergadano, Mirko
(86) International application number: PCT/EP2007/057769
(87) International publication number: WO 2008/012364

(56) References cited:
- EP-A- 1 270 315
- DE-A1- 10 341 687
- DE-A1- 10 354 272

## Description

### TECHNICAL FIELD

The present invention relates to a seat assembly provided with an articulated-quadrilateral supporting device for a motor vehicle.

### BACKGROUNDART

DE10341687 discloses the features of the preamble of claim 1. It shows a seat frame, which is designed as a movable unit formed by two rear levers and two front levers. The levers are swivel mounted to the rear of the seat area and to a base. The position of the levers in relation to the base is determined by an adjusting unit. A torsion spring is located between the movable unit and the base to urge the levers in an position that is intermediate between a forward position and a rear position.

When the seats of the known type described above are in their normal condition when the vehicle is travelling and are not occupied by passengers, there exists the need to be able to fold the backrest of the seat forwards so that it lies down flat against the sitting surface. In this way, the rear surface of the backrest can provide part of an additional loading surface or else a substantially horizontal supporting surface to enable the driver or other passengers to lay down thereon in a stable position a wide range of objects, such as, for example, plastic cups, portable computers, etc.

In particular, there exists the need to reduce as much as possible the encumbrance when the backrest is fold down forwards so that it lies on the sitting surface.

Furthermore, in motor vehicles without rear doors, there is the need to make it easier for rear-seat passengers to get into and out of the vehicle and, hence, the need to have front seats that are able to leave ample space for access between the front seats and the rear uprights of the side doors.

Preferably, the seat should be displaced forwards with a relatively wide range of travel in order to improve the convenience of access to the rear seats through the front doors of the vehicle.

From document DE 103 54 272, it is known a seat assembly wherein the backrest is adapted to be folded onto the sitting surface, which is then displaced rearwards. To this end the connection of the backrest with the sitting surface includes, in addition to a pair of front levers, two pairs of rear levers hinged to a three pivot plate also connected to the backrest by means of a connecting rod.

From document EP 1 270 315 it is also known a seat assembly wherein the sitting surface is connected to the base by means of two pairs of levers, which are also connected by means of a pair of diagonals each having a notch and pin connection with a relevant lever.

### DISCLOSURES OF INVENTION

The aim of the present invention is to provide a seat assembly equipped with an articulated-quadrilateral supporting device for a motor vehicle that will enable the requirements set forth above to be met in a simple and economically advantageous way.

According to the present invention a seat assembly for a motor vehicle is provided, as defined in claim 1.

### BRIEF DESCRIPTION OF THE DRAWINGS

For a better understanding of the present invention, a preferred embodiment is now described purely by way of nonlimiting example, with reference to the attached plate of drawings, wherein:
- Figure 1 is a side view of a preferred embodiment of the seat assembly provided with an articulated-quadrilateral supporting device for a motor vehicle, according to the present invention; and
- Figures 2 and 3 are similar to Figure 1 and show the seat assembly of Figure 1 in different functional positions.

### BEST MODE FOR CARRYING OUT THE INVENTION

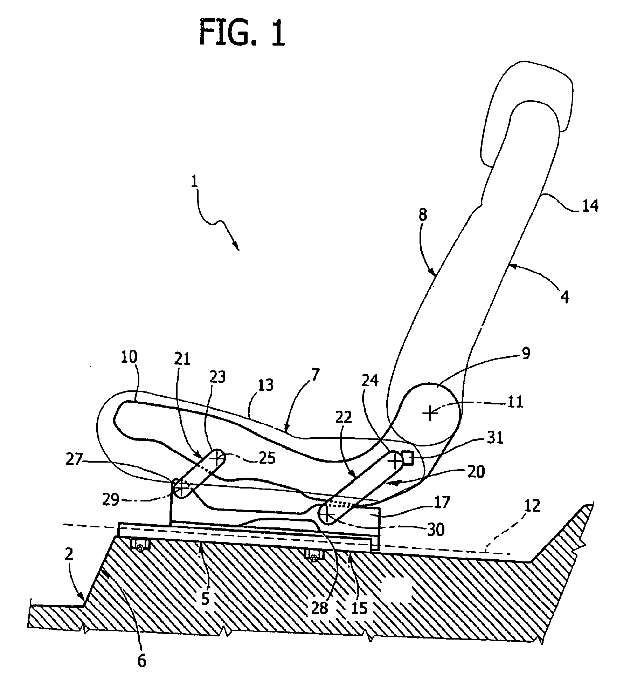

In Figure 1, the reference number 1 designates a seat assembly, which is provided in the passenger compartment 2 of a motor vehicle. The seat assembly 1 comprises a seat 4 and a supporting and movement assembly 5, which connects the seat 4 to a floor panel 6, which defines the bottom of the passenger compartment 2.

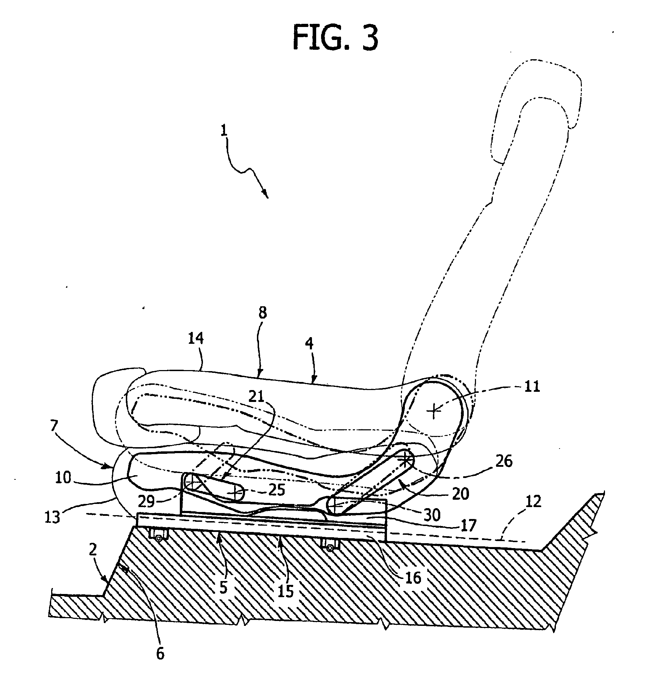

The seat 4 comprises a sitting surface 7 and a backrest 8, which is attached to two brackets defining the rear terminal portion 9 of a frame 10 of the sitting surface 7 and is able to turn about a horizontal axis 11 (Figure 1) orthogonal to a longitudinal direction 12 of advance of the motor vehicle, between a substantially vertical raised position (Figure 1) and a position where it is folded down so that it remains substantially horizontal (Figure 3).

Incidentally, it is pointed out that hereinafter the terms "front", "rear", "forwards", "backwards", "top", "bottom", etc. are used with reference to the direction of advance of the motor vehicle.

In the position indicated above where the backrest 8 is folded down, said backrest 8 is set resting against a padding 13, which covers at the top the frame 10, and has a rear surface 14 that extends in a substantially horizontal direction to define part of an additional loading surface and/or a resting surface. In this way, the surface 14 enables the driver or the passengers of the motor vehicle to lay, in a stable position, a wide range of objects, such as for example plastic cups, portable computers, light luggage, etc.

The assembly 5, instead, comprises a guide-and-slide device 15, which comprises, in turn, two longitudinal guide rails 16, fixed to the floor panel 6 in positions set, in a transverse direction, at a distance between one another, and a slide 17 coupled to the rails 16 in such a way as to be able to slide longitudinally. The slide 17 can be clamped by a releasable retention device, of a type in itself known and not shown, in a position of use that is fixed and/or can be adjusted with respect to the rails 16 and that is such as to satisfy the ergonomic requirements of the user.

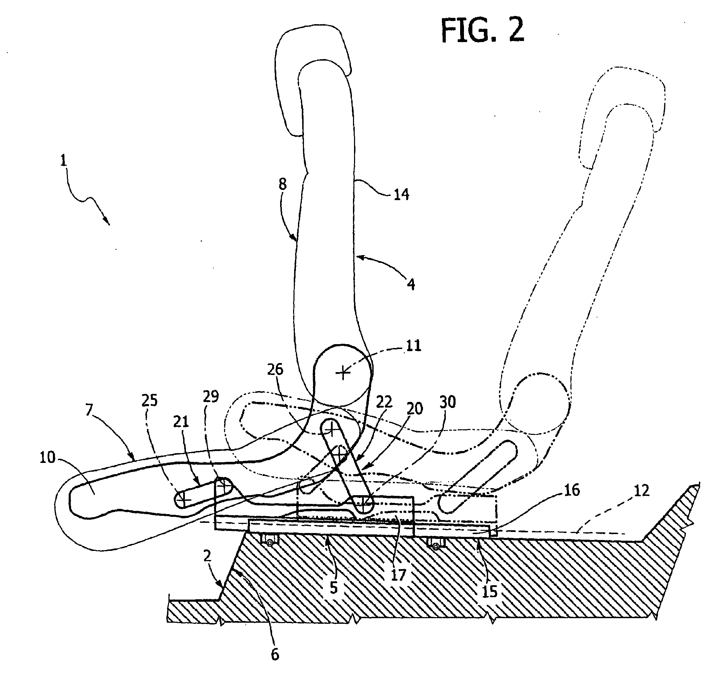

Once said retention device is released, the slide 17 can be slid along the rails 16 by pushing the seat 4 manually or else via a motor-driven device. In a preferred embodiment, when the rear-seat passengers need to get into or out of the vehicle through the front doors (not shown), the slide 17 is brought into an advanced end-of-travel position (Figure 2).

With reference to the attached figures, the assembly 5 further comprises an articulated quadrilateral 20 made up of at least one front connecting rod 21 and at least one rear connecting rod 22.

The top ends of the connecting rods 21, 22 are designated by the reference numbers 23 and 24, respectively, and are hinged to the frame 10 about respective axes 25, 26 parallel to the axis 11, whilst the bottom ends of the connecting rods 21, 22 are designated by the reference numbers 27 and 28, respectively, and are hinged to the slide 17 about respective axes 29, 30, which are also parallel to the axis 11.

The articulated quadrilateral 20 renders the seat 4 movable with respect the slide 17 from a first position, in which the seat 4 is in a normal condition when the vehicle is travelling and defines a seat for a passenger in optimal ergonomic conditions with respect to the other components of the passenger compartment 2, to a second position, in which the sitting surface 7 is longitudinally advanced with respect the first position to enable the rear-seat passengers to get in and out through the front doors, preferably in combination with advance of the slide 17.

In addition, thanks to the articulated quadrilateral 20, the seat 4 is movable with respect to the slide 17 also in an opposite direction, i.e., backwards, from the first position to a third position, in which the sitting surface 7 is lower than the first position. Preferably, the sitting surface 7 has a bottom cavity (not shown), which, in the aforesaid third position, houses the connecting rods 21, 22 completely and the slide 17 partially.

The length of the rear connecting rod 22 is greater than that of the front connecting rod 21 (by the term "length" is understood the distance between the axes 25, 29 and between the axes 26, 30) to obtain also a rotation of the sitting surface 7, in addition to a translation, during the displacement away from and towards the first position. In particular, in the second position, the seat 4 is partially tilted forwards with respect the first position to optimize the space necessary for the rear-seat passengers to get in and out of the vehicle.

The seat 4 remains released in the first position with respect to the slide 17 under the action of a releasable retention device 31 (shown as a whole in Figure 1), which preferably is carried by the frame 10 and acts on the connecting rod 22. Release of the device 31 is obtained by a lever transmission (not shown), operated by a manual control (not shown) set in sight on a side of the backrest 8. Alternatively, the device 31 is released by a motor-driven device (not shown), activated by a manual control provided in the passenger compartment 2.

Once the device 31 has been released, the movements away from and towards the first position are caused by manual thrusts and/or by the weight of the seat 4, and are possibly dampened in a way not described in detail, for example via springs (not shown), which can possibly facilitate also return of the seat 4 into/from the first position.

Alternatively, the movements of the seat 4 away from and towards the first position are motor-driven.

When the seat 4 reaches the third position, it is set resting against the slide 17 and/or against the rails 16 and/or the floor panel 6. The connecting rod 21 is rotated backwards about the axis 29 (in the clockwise direction, as viewed in Figure 3) and has exceeded a rear dead centre, defined by the alignment of the axis 25 with the axis 29 in the direction 12 so that any possible inertial action in the direction 12, due to sharp accelerations, braking or else impact of the motor vehicle, do not cause the sitting surface 7 to tilt over forwards towards the first position, but tend to cause rotation of the connecting rod 21 downwards and, hence, to push the sitting surface 7 further against the floor panel 6.

In a normal condition when the vehicle is travelling and when the seat is not occupied by a passenger, the backrest 8 can be tilted forwards in a position where it is folded down, to have the surface 14 available as substantially horizontal resting surface or loading surface. Using the third position of the seat 4 for folding down the backrest 8 (Figure 3), it is possible to reduce the encumbrance in the vertical direction of the seat assembly 1 with respect to the floor panel 6 in a situation of so-called optimal "packing", minimizing the height of the loading threshold defined by the surface 14.

According to a preferred embodiment, the rotation of the backrest 8 in a position where it is folded down occurs simultaneously with the displacement backwards of the seat 4 from the first position to the third position, in response to a single control device and/or to a single common actuation device (not shown) or else in response to various actuation devices synchronized with one another (not shown either).

The operation and the advantages of the seat assembly 1 are evident from the characteristics described above. In particular, the articulated quadrilateral 20 enables both advance of the seat 4 into an advanced position for enabling the rear-seat passengers to get into or out of the vehicle through the front doors and "packing" of the seat assembly 1 when the backrest 8 is folded down on the sitting surface 7.

In addition, the position of the connecting rod 21, when the seat 4 is in the third position, enables the seat 4 to be kept stationary even in the presence of forces of inertia in the direction 12.

Furthermore, the combination of the slide 17 with the quadrilateral 20 enables an ample advance of the seat 4 with respect the first position to enable the rear-seat passengers to get into or get out of the vehicle conveniently through the front doors.

Finally, it is clear that modifications and variations can be made to the assembly 1 described and shown herein, as long they remain within the scope of the present invention, as defined in the annexed claims.

In particular, the quadrilateral 20 could be connected to a fixed supporting base or directly to the floor panel 6, without the device 15. The connecting rods 21, 22 could be provided in a greater number, and/or could have lengths different from the ones shown, and/or have an inclination with respect to one another different from the one shown.

In addition, the device 31 could be carried by the slide 17 and/or act on the connecting rod 21.

Furthermore, the assembly 1 could be provided for a second row of seats, when the motor vehicle also has a third row of rear seats.

Finally, the device 31 could comprise a first portion, which prevents rotation of the seat 4 towards the second position, and a second portion, which prevents rotation of the seat 4 towards the third position and can be released in an independent way from the first portion. In this case, release of the backrest 8 from its substantially vertical raised position and release of the second portion of the device 31 could occur simultaneously as a result of a single control device and/or a single actuation device in common (not shown).

## Claims

1. A seat assembly (1) for a motor vehicle, comprising:
• a sitting surface (7);
• a backrest (8) that can rotate about a horizontal axis (11), orthogonal to a longitudinal direction (12) of advance of said motor vehicle, between a raised position and a folded position in which the backrest (8) is folded down onto said sitting surface (7); and
• a supporting and movement assembly (5) coupled to said sitting surface (7) to be connected to a supporting base (17); the supporting and movement assembly (5) comprising a pair of front connecting rods (21) and a pair of rear connecting means (22); said front connecting rod (21) comprising a first end (23) hinged to a frame (10) of said sitting surface (7) about a first axis (25) parallel to said horizontal axis (11), and a second end (27) hinged to the supporting base (17) about a second axis (29) which is also parallel to said horizontal axis (11); said rear connecting means (22) being also hinged to said frame (10) and to said supporting base (17);
said supporting and movement assembly (5) being designed to make said sitting surface (7) movable with respect to said supporting base (17) between:
• a first position, in which the seat assembly (1) defines a sitting place for a passenger,
• a second position, in which the seat assembly (1) is located forward of said first position; and
• a third position, in which the seat assembly is located rearward of said first position, and in which the sitting surface (7) is lower than in the first position, said backrest (8) being adapted to be located in the folded position when said sitting surface (7) is located in the third position to reach a configuration in which said backrest (8) has a rear surface (14) substantially horizontal;
wherein
• said horizontal axis (11) is located on brackets defining a rear terminal potion (9) of said frame (10);
• each said rear connecting means is formed by a single rear connecting rod (22) having a corresponding first end (24) hinged to a frame (10) of said sitting surface (7) about respective first axis (26) parallel to said horizontal axis (11), and a second end (28) hinged to the supporting base (17) about a second axis (30) which is also parallel to said horizontal axis (11);
• each said front connecting rod 21 and the relevant rear connecting rod (22) forming an articulated quadrilateral (20) wherein length of said rear connecting rod (22) is greater than that of said front connecting rod (21) so that said sitting surface (7) during displacement from the first to the second position is tilted forward to enable the rear-seat passengers of the motor vehicle to get in and out through a front door; and
**characterised in that** each said front connecting rod (21), when said sitting surface (7) is located in the third position, having its first axis (25) lower than the corresponding second axis (29) as to exceed a rear dead centre defined by the alignment of its first and second axes (25, 29) in an horizontal direction, so that any possible inertial in said direction due to sharp acceleration, braking or impact of the vehicle tends to cause rotation of the front connecting rod (21) downwards.

2. The seat assembly according to claim 1, wherein said supporting and movement assembly (5) further comprises a slide-and-guide device (15) comprising a slide (17) defining said supporting base; said slide (17) being longitudinally movable into an advanced end-of-travel position when said sitting surface (7) is being moved from the first position to the second position to improve enabling the rear-seat passengers of the motor vehicle to get in and out through front doors.

## Patentansprüche

1. Sitzanordnung (1) für ein Motorfahrzeug, umfassend:
- eine Sitzfläche (7);
- eine Rückenlehne (8) die um eine horizontale Achse (11) rotieren kann, orthogonal zu einer Vorwärtsbewegungsrichtung (12) des Motorfahrzeugs, zwischen einer aufgerichteten Position und einer gefalteten Position, in der die Rückenlehne (8) heruntergefaltet ist auf die Sitzfläche (7); und
- eine Anordnung (5) zur Halterung und zur Bewegung, gekoppelt mit der Sitzfläche (7), zur Verbindung mit einer Haltebasis (17); wobei die Anordnung (5) zur Halterung und Bewegung ein Paar von vorderen Verbindungsstangen (21) umfasst und ein Paar von hinteren Verbindungseinrichtungen (22); wobei die vorderen Verbindungsstangen (21) ein erstes Ende (23) umfassen, dass an einem Rahmen (10) der Sitzfläche (7) über eine erste Achse (25) angelenkt ist, parallel zu der horizontalen Achse (11), und ein zweites Ende (27), das an der Haltebasis (17) um eine zweite Achse (29) angelenkt ist, die ebenfalls parallel zu der horizontalen Achse (11) ist; wobei die hinteren Verbindungseinrichtungen (22) auch an dem Rahmen (10) sowie an der Haltebasis (17) angelenkt sind;
wobei die Anordnung (5) zur Halterung und Bewegung konstruiert ist, um die Sitzfläche (7) beweglich zu machen bezüglich der Haltebasis (17) zwischen:
- einer ersten Position, in der die Sitzanordnung (1) einen Sitzplatz für einen Passagier definiert,
- einer zweiten Position, in der die Sitzanordnung (1) vor der ersten Position angeordnet ist; und
- einer dritten Position, in der die Sitzanordnung hinter der ersten Position angeordnet ist und in der die Sitzfläche (7) niedriger ist als in der ersten Position, wobei die Rückenlehne (8) ausgebildet ist, um in der gefalteten Position zu sein, wenn die Sitzfläche (7) in der dritten Position angeordnet ist, um eine Konfiguration zu erreichen, bei der die Rückenlehne (8) eine im Wesentlichen horizontale hintere Fläche (14) hat; wobei
- die horizontale Achse (11) an Klammern angeordnet ist, die eine hintere Endposition (9) des Rahmens (10) definieren;
- wobei jeder der hinteren Verbindungseinrichtungen durch eine einzelne hintere Verbindungsstange (22) gebildet wird, mit einem entsprechenden ersten Ende (24), welches an einem Rahmen (10) der Sitzfläche (7) um die jeweilige erste Achse (26) parallel zu der horizontalen Achse (11) angelenkt ist und ein zweites Ende (28), welches an der Haltebasis um eine zweite Achse (30), die ebenfalls parallel zu der horizontalen Achse (11) ist, angelenkt ist;
- wobei die vordere Verbindungsstange (21) und die relevante hintere Verbindungsstange (22) ein gelenkiges Vierseit (20) bilden, wobei die Länge der hinteren Verbindungsstange (22) größer ist, als die der vorderen Verbindungsstange (21), so dass die Sitzfläche (7) während der Verschiebung aus der ersten Position in die zweite Position nach vorne gekippt wird, um es den Rücksitzpassagieren des Motorfahrzeuges zu ermöglichen durch eine Vordertür ein und auszusteigen; und
**dadurch gekennzeichnet, dass** bei jeder der vorderen Verbindungsstangen (21), wenn die Sitzfläche (7) sich in der dritten Position befindet, die erste Achse (25) niedriger ist, als die korrespondierende zweite Achse (29), um einen hinteren Totpunkt zu überschreiten, welcher definiert ist durch die Ausrichtung seiner ersten und zweiten Achsen (25, 29) in horizontaler Richtung, so dass jede mögliche Trägheitskraft in dieser Richtung aufgrund von starker Beschleunigung, Bremsen oder einem Zusammenstoß des Fahrzeuges dazu neigt, eine Rotation der vorderen Verbindungsstange (21) nach unten zu verursachen.

2. Sitzanordnung nach Anspruch 1, wobei die Anordnung (7) zur Halterung und Bewegung weiterhin eine Gleit- und Führungseinrichtung (15) umfasst, mit einem Schlitten (17), der die Haltebasis definiert; wobei der Schlitten (17) längsbeweglich ist, in eine vordere Bewegungsendposition, wenn die Sitzfläche (7) aus der ersten Position in die zweite Position bewegt wird, um die Möglichkeit des Ein- und Aussteigens der Rücksitzpassagiere durch die Vordertüren des Motorfahrzeuges zu verbessern.

## Revendications

1. Ensemble de siège (1) pour un véhicule à moteur, comprenant :
une surface d'assise (7) ;
un dossier (8) qui peut tourner autour d'un axe horizontal (11), orthogonal par rapport à une direction longitudinale (12) d'avancement dudit véhicule à moteur, entre une position relevée et une position pliée dans laquelle le dossier (8) est replié sur ladite surface d'assise (7) ; et
un ensemble de support et de déplacement (5) couplé à ladite surface d'assise (7) à raccorder à une base de support (17) ; l'ensemble de support et de déplacement (5) comprenant une paire de tiges de raccordement avant (21) et une paire de moyens de raccordement arrière (22) ; ladite tige de raccordement avant (21) comprenant une première extrémité (23) articulée par rapport à un châssis (10) de ladite surface d'assise (7) autour d'un premier axe (25) parallèle audit axe horizontal (11) et une deuxième extrémité (27) articulée par rapport à la base de support (17) autour d'un deuxième axe (29) qui est également parallèle audit axe horizontal (11) ; lesdits moyens de raccordement arrière (22) étant également articulés par rapport audit châssis (10) et à ladite base de support (17) ;
ledit ensemble de support et de déplacement (5) étant conçu pour rendre ladite surface d'assise (7) mobile par rapport à ladite base de support (17) entre :
une première position dans laquelle l'ensemble de siège (1) définit une place d'assise pour un passager,
une deuxième position dans laquelle l'ensemble de siège (1) est positionné en avant de ladite première position ; et
une troisième position dans laquelle l'ensemble de siège est positionné en arrière de ladite première position, et dans laquelle la surface d'assise (7) est moins importante que dans la première position, ledit dossier (8) étant adapté pour être positionné dans la position pliée lorsque ladite surface d'assise (7) est positionnée dans la troisième position pour atteindre une configuration dans laquelle ledit dossier (8) a une surface arrière (14) sensiblement horizontale ;
dans lequel :
ledit axe horizontal (11) est positionné sur des consoles définissant une partie terminale arrière (9) dudit châssis (10) ;
chacun desdits moyens de raccordement arrière est formé par une simple tige de raccordement arrière (22) ayant une première extrémité (24) correspondante, articulée par rapport à un châssis (10) de ladite surface d'assise (7) autour du premier axe (26) respectif parallèle audit axe horizontal (11), et une deuxième extrémité (28) articulée par rapport à la base de support (17) autour d'un deuxième axe (30) qui est également parallèle audit axe horizontal (11) ;
chacune parmi ladite tige de raccordement avant (21) et la tige de raccordement arrière (22) qui s'y rapporte, formant un quadrilatère articulé (20), dans lequel la longueur de ladite tige de raccordement arrière (22) est supérieure à celle de ladite tige de raccordement avant (21) de sorte que ladite surface d'assise (7) pendant le déplacement de la première à la deuxième position, est inclinée vers l'avant afin de permettre aux passagers assis sur le siège arrière du véhicule à moteur d'entrer et de sortir par une porte avant ; et
**caractérisé en ce que** ladite tige de raccordement avant (21), lorsque ladite surface d'assise (7) est positionnée dans la troisième position, ayant son premier axe (25) plus bas que le deuxième axe (29) correspondant, afin de dépasser un point mort arrière défini par l'alignement de ses premier et deuxième axes (25, 29) dans une direction horizontale, de sorte que toute inertie éventuelle dans ladite direction due à une accélération brusque, un freinage ou un impact du véhicule, a tendance à provoquer la rotation de la tige de raccordement avant (21) vers le bas.

2. Ensemble de siège selon la revendication 1, dans lequel ledit ensemble de support et de déplacement (5) comprend en outre un dispositif de coulissement et de guidage (15) comprenant une glissière (17) définissant ladite base de support ; ladite glissière (17) étant longitudinalement mobile dans une position de fin de course avancée lorsque ladite surface d'assise (7) est déplacée de la première position à la deuxième position pour améliorer le fait que les passagers assis sur le siège arrière du véhicule à moteur puissent entrer et sortir par les portes avant.
